# EUROPEAN PATENT APPLICATION

(11) **EP 4 545 338 A1**
(43) Date of publication of application: **30.04.2025**
(21) Application number: 23383084.3
(22) Date of filing: 24.10.2023
(51) Int. Cl.: B60L 1/00

(54) **A METHOD FOR INTERFACING AN AUXILIARY ELECTRICAL SYSTEM WITH AN ELECTRICAL POWER NETWORK OF A VEHICLE**

(71) Applicant: Thermo King LLC, Minneapolis, Minnesota 55420 (US)
(72) Inventor: SILVESTRI, Alessandro, 08013 Carrer D'Escipio 3.Barcelona (ES); VIDAL CLOS, Andreu, 25693 C Sant Cebrià alt 23 Salas de Pallars Lleida (ES)
(74) Representative: Haseltine Lake Kempner LLP

(57) **Abstract**

A method (400) for interfacing an auxiliary electrical system (300a, 300b) with an electrical power network (200) of a vehicle (100), the method comprising: i) the auxiliary electrical system transmitting (406) an engagement request to the electrical power network of the vehicle; ii) the electrical power network of the vehicle, responsive to the engagement request transmitted by the auxiliary electrical system, electrically coupling (410) a battery (210) of the electrical power network of the vehicle to an electrical power take-off point (230) of the vehicle and providing (412) an indication to the auxiliary electrical system that electrical power take-off is engaged; iii) the auxiliary electrical system, responsive to the indication that the electrical power take-off is engaged: pre-charging (416) a DC bus of the auxiliary electrical system; and closing (420a, 420b) a contactor (312) of the auxiliary electrical system to electrically couple the auxiliary electrical system to the electrical power take-off point of the vehicle.

## Description

### Field of the Invention

The present disclosure relates to a method for interfacing an auxiliary electrical system with an electrical power network of a vehicle. The present disclosure also extends to an auxiliary electrical system and a transport refrigeration unit incorporating an auxiliary electrical system, and to an electrical power network for a vehicle and a vehicle incorporating an electrical power network.

### Background

It is known to connect an auxiliary electrical system such as an electrical system of a transport refrigeration unit (TRU) to an electrical power take-off (ePTO) point of a vehicle in order to draw power from an electrical power network of the vehicle (i.e., a vehicle electrical power network). The vehicle electrical power network may generally comprise an electrical energy storage system (e.g., a battery) for providing power to various components of the vehicle, such as driving motors coupled to the wheels of the vehicle. When connected to the ePTO point, the auxiliary electrical system may receive power from the vehicle battery. For example, where the auxiliary electrical system is an electrical system of a TRU, electrical power drawn by the auxiliary system from the vehicle electrical power network (via the ePTO point) may be used for operating various components of the TRU, such as a compressor which forms a part of a vapour-compression circuit of the TRU and/or a fan.

In known systems, the vehicle electrical power network may comprise a contactor for selectively preventing and permitting electrical power flow to the ePTO point. When the vehicle power network is able to supply electrical power to the ePTO point (e.g., when a state of charge of the battery is sufficiently high and/or when the electrical demand placed on the vehicle power network can be met by the vehicle electrical power network), the contactor may be closed, and the auxiliary electrical system is then able to draw power from the vehicle electrical power network accordingly.

In such known systems, there is no coordination between the vehicle and the auxiliary electrical system. Electrical power can flow from the ePTO point when the contactor is closed. Consequently, there is a risk that a high inrush current could flow into the auxiliary electrical system during installation of the auxiliary electrical system when the contactor of the vehicle electrical power network is closed, which could damage the auxiliary electrical system. Additionally, in known systems it is necessary for an operator manually to connect the auxiliary electrical system to the ePTO point of the vehicle. If the contactor of the vehicle electrical power network is closed before such a manual connection is made, there is a risk of electric shock to the operator when making this connection.

Thus it is desirable to improve the way in which an electrical connection is made between a vehicle electrical power network and an auxiliary electrical system. The present invention has been devised with the foregoing in mind.

### Summary

According to a first aspect, the invention provides a method for interfacing an auxiliary electrical system with an electrical power network of a vehicle, the method comprising: i) the auxiliary electrical system transmitting an engagement request to the electrical power network of the vehicle; ii) the electrical power network of the vehicle, responsive to the engagement request transmitted by the auxiliary electrical system, electrically coupling a battery of the electrical power network of the vehicle to an electrical power take-off point of the vehicle and providing an indication to the auxiliary electrical system that electrical power take-off is engaged; iii) the auxiliary electrical system, responsive to the indication that the electrical power take-off is engaged: pre-charging a DC bus of the auxiliary electrical system; and closing a contactor of the auxiliary electrical system to electrically couple the auxiliary electrical system to the electrical power take-off point of the vehicle.

The method may further comprise: the auxiliary electrical system determining that a need exists for power from the electrical power network of the vehicle prior to transmitting the engagement request to the electrical power network of the vehicle.

The method may further comprise: the electrical power network pre-charging the electrical power take-off before providing the indication to the auxiliary electrical system that the electrical power take-off is engaged.

Providing the indication that the electrical power take-off is engaged may comprises one or more of: setting an internal status of the electrical power network to engaged; and transmitting an engagement response indicating that the electrical power take-off is engaged to the auxiliary electrical system.

The method may further comprise: the auxiliary electrical system detecting a voltage at the electrical power take-off point prior to pre-charging the DC bus.

Detecting the voltage at the electrical power take-off point may comprise one or more of: receiving an indication of the voltage at the electrical power take-off point from the vehicle electrical power network; and the auxiliary electrical system monitoring the voltage at the electrical power take-off point.

Pre-charging the DC bus may be performed by the auxiliary electrical system either: using a pre-charging circuit of the auxiliary electrical system, wherein the pre-charging circuit draws power from a battery; or by the auxiliary electrical system drawing a current from the electrical power take-off point through a resistor.

When pre-charging the DC bus is performed by the auxiliary electrical system drawing a current from the electrical power take-off point through the resistor, the auxiliary electrical system closes its contactor prior to pre-charging the DC bus.

When pre-charging the DC bus is performed using the pre-charging circuit of the auxiliary electrical system, the auxiliary electrical system closes its contactor after pre-charging the DC bus.

The contactor of the auxiliary electrical system may be closed when a voltage of the DC bus is within a predetermined threshold of a voltage at the electrical power take-off point.

Communication between the auxiliary electrical system and the electrical power network may be performed over a controller area network bus.

The method may further comprise the auxiliary electrical system determining that a need no longer exists for power from the electrical power network of the vehicle.

The method may further comprise the auxiliary electrical system transmitting a disengagement request to the electrical power network of the vehicle.

The method may further comprise the auxiliary electrical system performing a discharging procedure to discharge the DC bus.

The method may further comprise the electrical power network of the vehicle, responsive to the disengagement request, electrically decoupling the vehicle battery from the electrical power take-off point.

The method may further comprise the electrical power network of the vehicle performing a discharging procedure to discharge the electrical power take-off point.

The method may further comprise the auxiliary electrical system, responsive to detection of a drop in a voltage of the electrical power take-off point, opening its contactor.

The method may further comprise the auxiliary electrical system performing a discharging procedure to discharge the DC bus.

According to a second aspect, the invention provides an auxiliary electrical system configured to interface with an electrical power network of a vehicle, the auxiliary electrical system comprising: a connector configured to couple with the electrical power network of the vehicle; a power distribution unit; a contactor, and a DC bus, wherein the auxiliary electrical system is configured to: transmit an engagement request to the electrical power network of the vehicle; and responsive to an indication provided by the electrical power network of the vehicle that an electrical power take-off of the electrical power network of the vehicle is engaged: pre-charge the DC bus; and close the contactor to electrically couple the auxiliary electrical system to an electrical power take-off point of the electrical power network of the vehicle.

According to a third aspect, the invention provides a vehicle electrical power network configured to interface with an auxiliary electrical system, the vehicle electrical power network comprising: a battery; an electrical power take-off point configured to be electrically coupled to the auxiliary electrical system; and a contactor for selectively coupling the battery to the electrical power take-off point, wherein the vehicle electrical power network is configured to, responsive to an engagement request transmitted by the auxiliary electrical system: electrically couple the battery to the electrical power take-off point; and provide an indication to the auxiliary electrical system that electrical power take-off is engaged.

According to a fourth aspect, the invention provides a method, performed by an auxiliary electrical system, for interfacing the auxiliary electrical system with an electrical power network of a vehicle, the method comprising: transmitting an engagement request to the electrical power network of the vehicle; and responsive to an indication provided by the electrical power network of the vehicle that an electrical power take-off of the electrical power network of the vehicle is engaged: pre-charging a DC bus of the auxiliary electrical system; and closing a contactor of the auxiliary electrical system to electrically couple the auxiliary electrical system to an electrical power take-off point of the vehicle.

According to a fifth aspect, the invention provides a method, performed by an electrical power network of a vehicle, for interfacing an auxiliary electrical system with the electrical power network of the vehicle, the method comprising: responsive to an engagement request transmitted by the auxiliary electrical system: electrically coupling a battery of the electrical power network of the vehicle to an electrical power take-off point of the vehicle and providing an indication to the auxiliary electrical system that electrical power take-off is engaged.

According to a sixth aspect, the invention provides a computer program comprising instructions to cause the auxiliary electrical system of the second aspect to perform the method of the fourth aspect

According to a seventh aspect, the invention provides a computer program comprising instructions to cause the vehicle electrical power network of the third aspect to perform the method of the fifth aspect.

According to an eighth aspect, the invention provides a computer-readable medium having stored thereon the computer program of the sixth or seventh aspect.

According to a ninth aspect, the invention provides a transport refrigeration unit comprising the auxiliary electrical system of the second aspect and one or more of: a compressor; and a fan.

According to a tenth aspect, the invention provides a vehicle comprising the vehicle electrical power network of the third aspect.

Throughout this specification the word "comprise", or variations such as "comprises" or "comprising", will be understood to imply the inclusion of a stated element, integer or step, or group of elements, integers or steps, but not the exclusion of any other element, integer or step, or group of elements, integers or steps.

### Brief Description of Drawings

Embodiments of the invention will now be described, strictly by way of example only, with reference to the accompanying drawings, of which:
Figure 1 shows a vehicle comprising a transport refrigeration system;
Figure 2 is a schematic diagram showing an electrical power network of a vehicle and an auxiliary electrical system;
Figure 3 is a schematic diagram showing an electrical power network of a vehicle and an alternative auxiliary electrical system;
Figure 4A is a flow diagram illustrating steps in a method for interfacing an auxiliary electrical system with an electrical power network of a vehicle;
Figure 4B is a flow diagram illustrating further steps in the method for interfacing an auxiliary electrical system with an electrical power network of a vehicle;
Figure 4C is a flow diagram illustrating further steps in the method for interfacing an auxiliary electrical system with an electrical power network of a vehicle; and
Figure 5 shows, highly schematically, machine readable media storing computer programs which, when executed by suitable processing means of an electrical power network of a vehicle and an auxiliary electrical system, cause the electrical power network and the auxiliary electrical system to perform the method shown in Figures 4a - 4C.

### Detailed Description

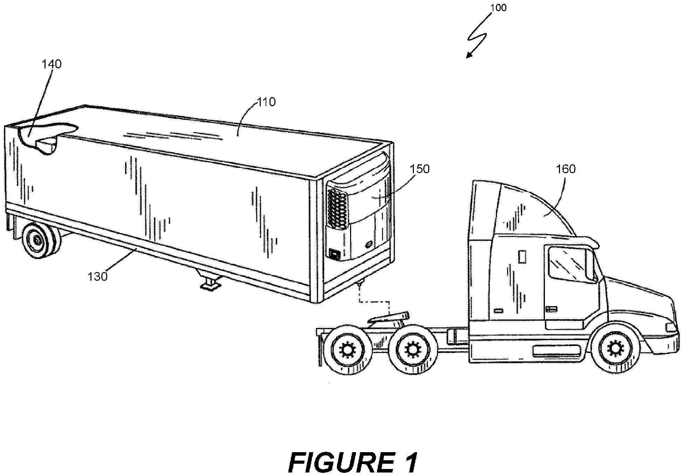

**Figure 1** shows a vehicle 100 comprising a transport refrigeration system 110. In the example of FIG. 1, the transport refrigeration system 110 forms a part of an over-the-road refrigerated semi-trailer having a structure 130 supporting (or forming) at least one climate-controlled compartment 140 which is configured to be cooled and/or heated by a TRU 150. The climate-controlled compartment 140 can take the form of multiple compartments or have multiple zones. The structure 130 includes a chassis. The structure 130 supports the TRU 150. The vehicle 100 further comprises a tractor unit 160 removably couplable to the trailer.

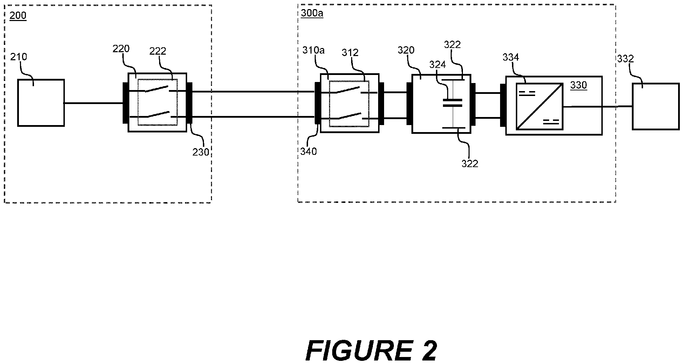

**Figure 2** is a schematic diagram showing an electrical power network of a vehicle (also referred to herein as a vehicle electrical power network) and an auxiliary electrical system according to the present disclosure.

The vehicle electrical power network, shown generally at 200 in Figure 2, may be incorporated or installed in a vehicle (e.g. the tractor unit 160 of vehicle 100 of Figure 1) and comprises, in the illustrated example, a battery 210, a battery management system (BMS) 220, and a connector 230.

The battery 210 may be a high-voltage battery having a nominal or rated voltage of 400V DC or 800V DC, for example. The battery 210 is coupled to the battery management system 220.

The connector 230 is configured to permit the vehicle electrical power network 200 to be coupled to an auxiliary electrical system 300a, e.g. by means of a suitable cable. The connector 230 thus provides an electrical power take-off (ePTO) point (which may also be referred to simply as an electrical power take-off or ePTO) for the vehicle electrical power network 200.

The battery management system 220 is configured to receive a supply voltage from the battery 210 and to supply an output voltage to the connector 230. In the illustrated example the battery management system 220 includes a contactor 222 for selectively allowing or preventing current to flow from the battery 210 to the connector 230. Thus, when the contactor 222 is closed, current can flow from the battery 210 to the connector 230, whereas when the contactor 222 is open, current cannot flow from the battery 210 to the connector 230. It will be appreciated by those of ordinary skill in the art that the contactor 222 need not be included in the battery management system 220, but could instead be provided elsewhere in the vehicle electrical power network 200. For example, the contactor 222 could be coupled between an output of the battery management system 220 and the connector 230.

The auxiliary electrical system 300a in this example comprises a power distribution unit (PDU) 31 0a, a core power module (CPM) having a DC link module 320 and a pre-charge circuit 330, and a connector 340.

The power distribution unit 310a is configured to receive electrical power from the vehicle electrical power network 200 (e.g. via a suitable cable coupled between the connector 230 of the vehicle electrical power network 200 and the connector 340 of the auxiliary electrical system 300a) and to distribute it to the DC link module 320.

In the illustrated example, the power distribution unit 310a includes a contactor 312 for selectively allowing or preventing current to flow from the power distribution unit 310a to the DC link module320. Thus, when the contactor 312 is closed, current can flow from the power distribution unit 310a to the DC link module320, whereas when the contactor 312 is open, current cannot flow from the power distribution unit 310a to the DC link module320. It will be appreciated by those of ordinary skill in the art that the contactor 312 need not be included in the power distribution unit 31 0a, but could instead be provided elsewhere in the auxiliary electrical system 300a. For example, the contactor 312 could be coupled between the connector 340 and an input of the power distribution unit 310a, or between an output of the power distribution unit 310a and the DC link module320.

The DC link module320 is configured to receive DC electrical power from the power distribution unit 310a and to supply DC electrical power to downstream components or subsystems of the host system (e.g. compressors, fans and the like, if the host system is a TRU). The DC link module 320 may include one or more power converters for converting an input DC voltage at a first magnitude, received from the power distribution unit 310a, into one or more output DC or AC voltages at magnitudes that differ from the first magnitude, for use in powering the components or subsystems of the host system.

The DC link module 320 in this example includes a DC bus 322 having a capacitor 324 for smoothing and filtering the DC input voltage received from the power distribution unit 310a, e.g. to reduce ripple introduced by any switching power converters that receive the DC input voltage from the DC bus 322. It will be appreciated by those of ordinary skill in the art that the DC bus 322 and the associated DC capacitor 324 that need not be incorporated in the DC link module 320, but could instead be provide elsewhere in the auxiliary electrical system 300a.

To prevent potentially damaging inrush currents from flowing into the DC link module 320 (and into any power converters that form part of or are coupled to the DC link module 320) when the contactor 312 is first closed to supply the DC voltage to the DC link module 320, the DC bus 322 should be pre-charged (e.g. by pre-charging the capacitor 324) before the contactor 312 is closed. The pre-charge circuit 330 is configured to perform such pre-charging.

In the example shown in Figure 2, the pre-charge circuit 330 is powered by a low-voltage battery 332 (e.g. a battery having a nominal or rated output voltage of 12 volts DC) and a DC-DC converter 334. The low-voltage battery 332 may be a low-voltage battery of the vehicle 100, for example. The DC-DC converter 334 is configured to convert a relatively low (e.g. 12V) DC voltage into a relatively higher (e.g. 400V) DC voltage, and to supply the relatively higher DC voltage to the DC bus 322 to pre-charge the capacitor 324 to a voltage that is equal to, or at least within a predefined threshold value of, the magnitude of the DC voltage supplied by the power distribution unit 310a when the contactor 312 is closed. Pre-charging the capacitor 324 (and hence the DC bus 322) in this way reduces the magnitude of current that can flow into the DC link module 320 when the contactor 312 is first closed.

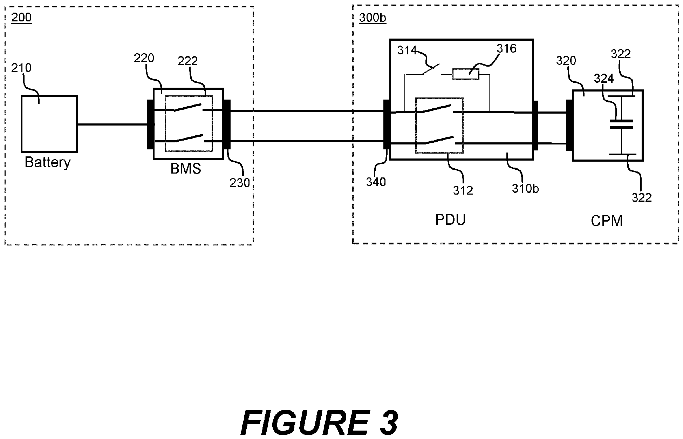

**Figure 3** is a schematic diagram showing an electrical power network of a vehicle (also referred to herein as a vehicle electrical power network) and an alternative auxiliary electrical system according to the present disclosure.

The electrical power network and the alternative auxiliary electrical system of Figure 3 have many features in common with the electrical power network and the auxiliary electrical system of Figure 2. Such common features are denoted by common reference numerals in Figures 2 and 3, and will not be described again in detail here for the sake of clarity and brevity.

The alternative auxiliary electrical system, shown generally at 300b in Figure 3, differs from the auxiliary electrical system 300a of Figure 2 in that it does not include the pre-charge circuit 330.

Instead, the power distribution unit 310b of the alternative auxiliary electrical system 300b includes additional pre-charge circuitry comprising a switch or contactor 314 and a resistor 316 coupled in series between an input of the power distribution unit 310b and an output of the power distribution unit 310b. This additional pre-charge circuitry enables the DC bus 322 to be pre-charged using current received from the vehicle electrical power network 200 before the contactor 312 is closed.

When the switch or contactor 314 is closed, current can flow from the vehicle electrical power network 200 (e.g. via a suitable cable coupled between the connector 230 of the vehicle electrical power network 200 and the connector 340 of the auxiliary electrical system 300b) to the DC bus 322 and hence to the capacitor 324, to charge the capacitor 324, hence charging the DC bus 322. The series resistor 316 limits the amount of current that can flow during this pre-charging of the DC bus 322. As in the example shown in Figure 2, the contactor 312 can be closed once the capacitor 324 has been pre-charged to a voltage that is equal to, or at least within a predefined threshold value of, the magnitude of the DC voltage supplied by the power distribution unit 310a when the contactor 312 is closed.

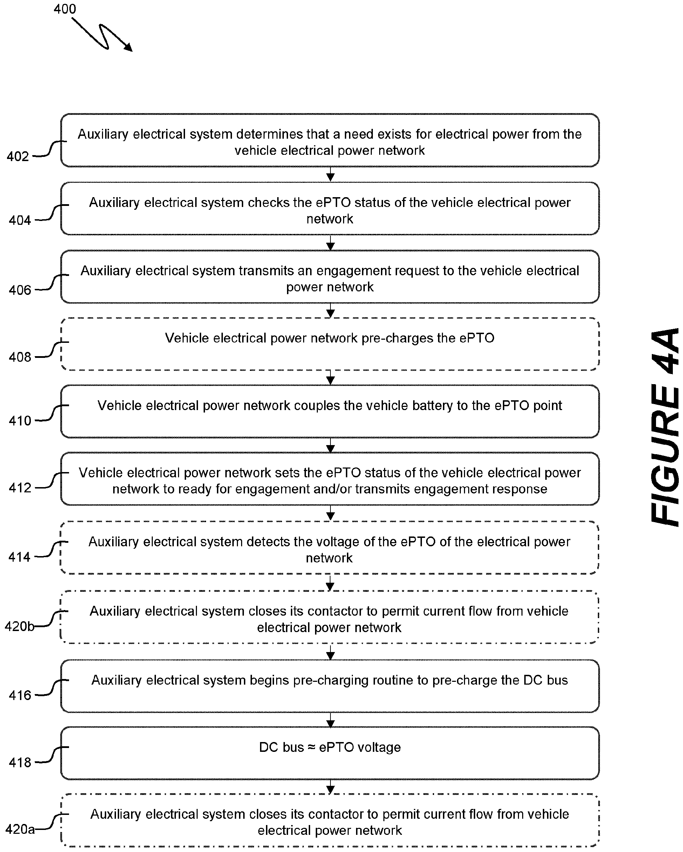

**Figure 4A** is a flow diagram illustrating steps in a method 400 for interfacing an auxiliary electrical system (e.g. the auxiliary electrical system 300a of Figure 2 or the auxiliary electrical system 300b of Figure 3) with an electrical power network of a vehicle (e.g. the vehicle electrical power network 200 of Figures 2 and 3).

If the vehicle electrical power network 200 can supply power to an auxiliary electrical system 300a, 300b, an ePTO of the vehicle electrical power network 200 may be enabled. In some examples (e.g. where a permanent electrical coupling exists between the battery 210 and the battery management system 220), the ePTO may always be enabled, or may be enabled automatically when an electrical system of the vehicle is enabled (e.g. when the vehicle electrical system has been switched on by turning an ignition key, pressing a switch etc.). In other examples the ePTO can be enabled manually, e.g. by actuating a switch on the vehicle's dashboard or remotely via an app or the like. Enabling the ePTO in this way may enable an electrical connection between the battery 210 and the battery management system 220, for example by closing a switch or contactor in the coupling between the battery 210 and the battery management system 220.

When the ePTO has been enabled, the vehicle electrical power network 200 may set an internal status as being available for engagement via the ePTO. When the ePTO has not been enabled (or has been disabled), the vehicle electrical power network 200 may set the internal status may as being unavailable for engagement.

In response to a determination by the auxiliary electrical system 300a, 300b that a need for electrical power from a vehicle electrical power network 200 exists (step 402 of Figure 4A), the auxiliary electrical system communicates 300a, 300b with the vehicle electrical power network 200 to check the status of the ePTO of the vehicle electrical power network 200 (step 404). For example, to check the status of the ePTO, the auxiliary electrical system 300a, 300b may query the internal status of the vehicle electrical power network 200.

If the check of the status of the ePTO indicates that the ePTO of the vehicle electrical power network 200 is ready for engagement with the auxiliary electrical system 300a, 300b, the auxiliary electrical system 300a, 300b transmits an engagement request to the vehicle electrical power network 200 (step 406).

In response to the engagement request, the vehicle electrical power network 200 may pre-charge the ePTO, e.g. by charging a capacitor of or associated with the battery management system 220 (step 408), and couples the ePTO to the vehicle battery 210, e.g. by closing the contactor 222 to electrically couple the connector 230 of the vehicle electrical power network 200 to the battery 210 (step 410).

Once a voltage at the ePTO of the vehicle electrical power network 200 (e.g. a voltage across the capacitor of or associated with the battery management system 220) is equal to (or at least within some predefined threshold of) the voltage of the battery 210, the vehicle electrical power network 200 sets its internal status as being ready for engagement with the auxiliary electrical system 300a, 300b (step 412). Additionally or alternatively, the vehicle electrical power network 200 may transmit an engagement response to the auxiliary electrical system 300a, 300b, indicating that the vehicle electrical power network 200 is ready for engagement with the auxiliary electrical system 300a, 300b.

The auxiliary electrical system 300a, 300b may (at step 414) detect the voltage of the ePTO of the vehicle electrical power network 200. In some examples, the vehicle electrical power network 200 may transmit (e.g. periodically or continuously) an indication of the voltage of the ePTO to the auxiliary electrical system 300a, 300b. In other examples, the auxiliary electrical system 300a, 300b may monitor the voltage at the ePTO using an appropriate sensing arrangement.

In response to the change of the internal status of the vehicle electrical power network 200 to ready for engagement and/or the engagement response message, the auxiliary electrical system 300a, 300b begins (at step 416) a pre-charging routine to pre-charge the DC bus 322 to a voltage equal or close to the voltage of the ePTO.

In the auxiliary electrical system 300a, this pre-charging is performed using the pre-charge circuit 330, to pre-charge the DC bus 322 from the battery 332 of the auxiliary electrical system 300a, as described above with reference to Figure 2.

In the alternative auxiliary electrical system 300b, pre-charging is performed using the pre-charging circuitry (switch or contactor 314 and resistor 316) of the power distribution unit 310b, to pre-charge the DC bus 322 from the vehicle electrical power network 200, as described above with reference to Figure 3. To allow pre-charging current to flow to the DC bus 322 from the vehicle electrical power network 200 (via the resistor 316), the alternative auxiliary electrical system 300b is operative to close its contactor 312 prior to beginning the pre-charging routine, at step 420b. Thus, when interfacing the alternative auxiliary electrical system 300b to the vehicle electrical power network 200, step 420b of the method 400 is performed before step 416. The resistor 316 restricts the current that can flow into the DC bus 322, thus preventing potentially damaging inrush currents.

Once a voltage of the DC bus 322 (e.g. a voltage across the capacitor 324) has reached a voltage that is equal to, or at least within a predefined threshold value of, the voltage of the ePTO of the vehicle electrical power network 200 (step 418), the auxiliary electrical system 300a, 300b closes its contactor 312 (step 420a) to permit current to flow from the vehicle electrical power network 200 to the DC link module 320 of the auxiliary electrical system 300a, 300b.

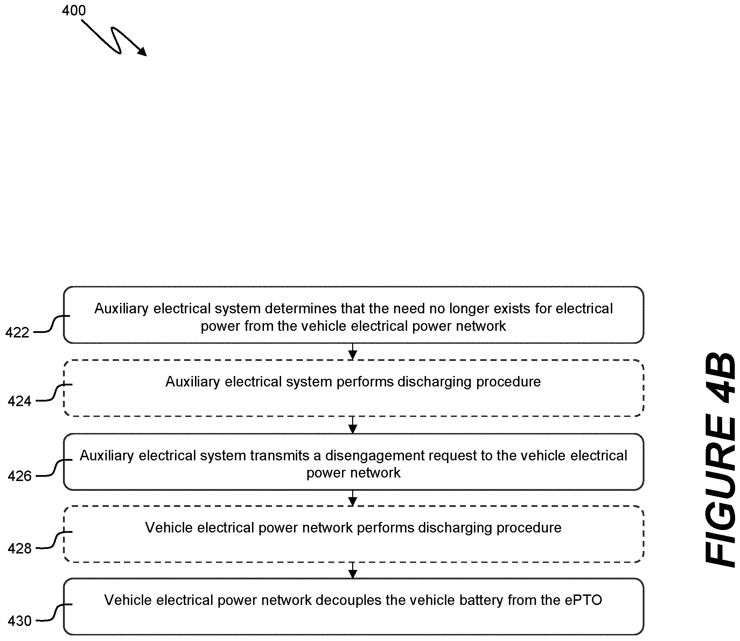

**Figure 4B** is a flow diagram showing further steps in the method 400, which may be performed if the auxiliary electrical system 300a, 300b determines that the need no longer exists for electrical power from the vehicle electrical power network 200.

At step 422, the auxiliary electrical system 300a, 300b determines that the need for electrical power from the vehicle electrical power network 200 no longer exists. The auxiliary electrical system 300a, 300b may then perform a discharging procedure to reduce the reduce the voltage on its DC bus 322 to zero (step 424). The auxiliary electrical system 300a, 300b may also transmit a disengagement request to the vehicle electrical power network 200 (step 426). In response to the disengagement request, the vehicle electrical power network 200 may perform its own discharging procedure (step 428) to reduce the voltage at the ePTO before decoupling the vehicle battery 210 from the ePTO (step 430), e.g. by opening the contactor 222.

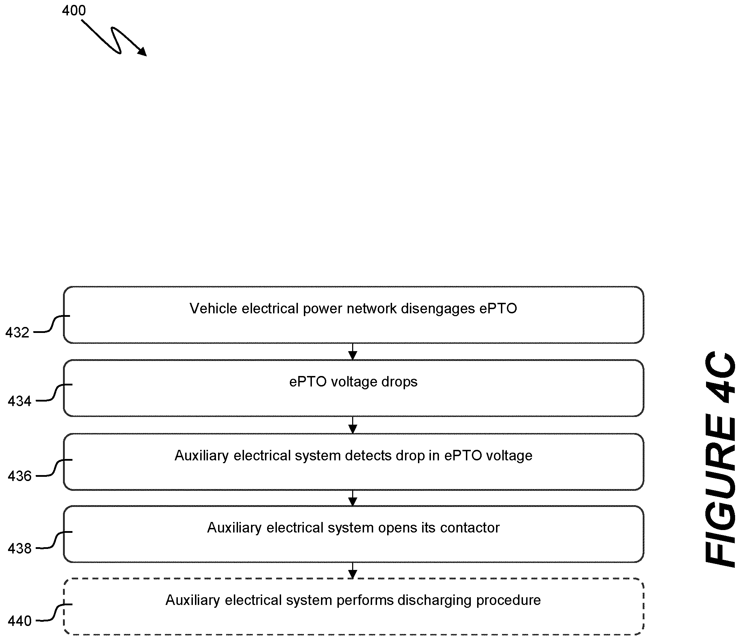

**Figure 4C** is a flow diagram showing further steps in the method 400, which may be performed if the vehicle electrical power network 200 unilaterally disengages the ePTO, e.g. by opening the contactor 222. This may occur, for example, if a state of charge of the vehicle battery 210 falls below a predefined minimum level, e.g. a minimum level at which the vehicle battery 210 can safely or reliably supply electrical power to both the vehicle and the auxiliary electrical system 300a, 300b.

When the vehicle electrical power network 200 disengages the ePTO (step 432), the ePTO voltage quickly begins to drops to zero (step 434). It will be recalled that the auxiliary electrical system 300a, 300b detects the ePTO, e.g. using an appropriate sensing arrangement or from an indication of the ePTO voltage transmitted by the vehicle electrical power network 200. At step 436, the auxiliary electrical system 300a, 300b detects a drop in voltage resulting from the disengagement of the ePTO (which may be distinguished by the auxiliary electrical system 300a, 300b from normal fluctuations in the ePTO voltage based on a rate of change of the ePTO voltage or a magnitude of the drop in ePTO voltage, for example). In response, the auxiliary electrical system 300a, 300b opens its contactor 312 (step 438), and may subsequently perform a discharging procedure to reduce the voltage on its DC bus to zero (step 440).

Communications between the vehicle electrical power network 200 and the auxiliary electrical system 300a, 300b in the method 400 illustrated in Figures 4A - 4C (e.g. to transmit the engagement and disengagement requests from the auxiliary electrical system 300a, 300b to the vehicle electrical power network 200 and to transmit the engagement response and indication of the ePTO voltage from the vehicle electrical power network 200 to the auxiliary electrical system 300a, 300b) may be performed over a controller area network (CAN) bus, with the vehicle electrical power network 200 and the auxiliary electrical system 300a, 300b each being provided with a suitable CAN node and CAN transceiver, as will be familiar to those skilled in the art.

The method 400 thus provides a handshaking protocol for interfacing the auxiliary electrical system 300a, 300b with the vehicle electrical power network 200 in a manner that ensures that pre-charging of the DC bus 324 is performed correctly and thus reduces the risk of potentially damaging inrush currents to the auxiliary electrical system 300a, 300b. Additionally, the handshaking protocol improves operator safety.

No current can flow from the vehicle electrical power network 200 until at least steps 404, 410 - 412 and 416 - 420a/420b of the method 400 have been completed. Thus, while the operator is manually connecting the auxiliary electrical system 300a, 300b to the ePTO of the vehicle, no current can flow from the ePTO, thus reducing the risk of electrical shock to the operator.

The additional step of discharging the DC bus of the auxiliary electrical system 300a, 300b that may be performed when the need no longer exists for the auxiliary electrical system 300a, 300b to receive electrical power from the vehicle electrical power network 200 or when the vehicle electrical power network unilaterally disengages the ePTO further increases operator safety, as no residual electrical energy is stored in the auxiliary electrical system 300a, 300b after it has stopped receiving electrical power from the vehicle electrical power network 200.

Similarly, the additional step of discharging the ePTO that may be performed when the need no longer exists for the auxiliary electrical system 300a, 300b to receive electrical power from the vehicle electrical power network 200 further increases operator safety, as the ePTO contains no residual electrical energy after it has stopped supplying electrical power to the auxiliary electrical system 300a, 300b.

The method 400 may be implemented in software (i.e. one or more computer programs) that is executed by suitable processing means (e.g. microprocessors, microprocessors or the like) of the vehicle electrical power network 200 and the auxiliary electrical system 300a, 300b. It will be appreciated that a first computer program will be executed by the processing means of the auxiliary electrical system 300a, 300b to perform those steps of the method 400 that are performed by the auxiliary electrical system 300a, 300b (which may be regarded as constituting a first method performed by the auxiliary electrical system 300a, 300b), and a second computer program will be executed by the processing means of the vehicle electrical power network 200 to perform those steps of the method 400 that are performed by the vehicle electrical power network 200 (which may be regarded as constituting a second method performed by the vehicle electrical power network 200).

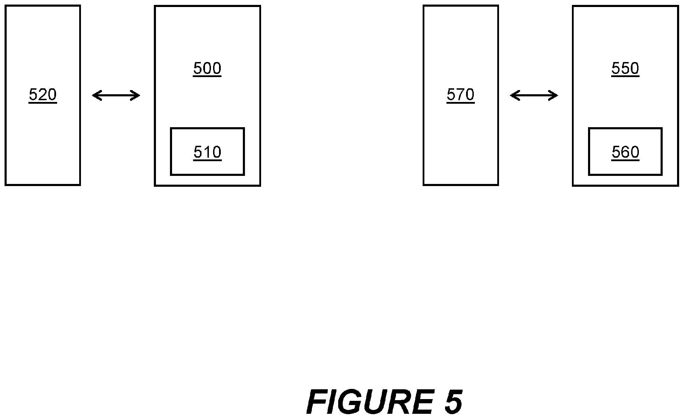

**Figure 5** shows, highly schematically, a first machine-readable medium 500 having stored thereon a first computer program 510 comprising instructions which, when executed by suitable processing means 520 of the auxiliary electrical system 300a, 300b, cause the auxiliary electrical system 300a, 300b to perform the steps of the above-described first method, and a second machine-readable medium 550 having stored thereon a second computer program 560 comprising instructions which, when executed by suitable processing means 570 of the vehicle electrical power network 200, cause the vehicle electrical power network 200 to perform the steps of the above-described second method.

Except where mutually exclusive, a feature described in relation to any one of the above aspects may be applied mutatis mutandis to any other aspect. Furthermore, except where mutually exclusive, any feature described herein may be applied to any aspect and/or combined with any other feature described herein. Moreover, while the present disclosure is made with in the context of transport refrigeration systems and/or vapour-compression circuits, it will be appreciated that the present disclosure has other possible applications in other technical areas.

This disclosure encompasses all changes, substitutions, variations, alterations, and modifications to the example embodiments herein that a person having ordinary skill in the art would comprehend. Similarly, where appropriate, the appended claims encompass all changes, substitutions, variations, alterations, and modifications to the example embodiments herein that a person having ordinary skill in the art would comprehend. Moreover, reference in the appended claims to an apparatus or system or a component of an apparatus or system being adapted to, arranged to, capable of, configured to, enabled to, operable to, or operative to perform a particular function encompasses that apparatus, system, or component, whether or not it or that particular function is activated, turned on, or unlocked, as long as that apparatus, system, or component is so adapted, arranged, capable, configured, enabled, operable, or operative. Accordingly, modifications, additions, or omissions may be made to the systems, apparatuses, and methods described herein without departing from the scope of the disclosure. For example, the components of the systems and apparatuses may be integrated or separated. Moreover, the operations of the systems and apparatuses disclosed herein may be performed by more, fewer, or other components and the methods described may include more, fewer, or other steps. Additionally, steps may be performed in any suitable order. As used in this document, "each" refers to each member of a set or each member of a subset of a set.

Although exemplary embodiments are illustrated in the figures and described below, the principles of the present disclosure may be implemented using any number of techniques, whether currently known or not. The present disclosure should in no way be limited to the exemplary implementations and techniques illustrated in the drawings and described above.

Unless otherwise specifically noted, articles depicted in the drawings are not necessarily drawn to scale.

All examples and conditional language recited herein are intended for pedagogical objects to aid the reader in understanding the disclosure and the concepts contributed by the inventor to furthering the art, and are construed as being without limitation to such specifically recited examples and conditions. Although embodiments of the present disclosure have been described in detail, it should be understood that various changes, substitutions, and alterations could be made hereto without departing from the spirit and scope of the disclosure.

Although specific advantages have been enumerated above, various embodiments may include some, none, or all of the enumerated advantages. Additionally, other technical advantages may become readily apparent to one of ordinary skill in the art after review of the foregoing figures and description.

It should be noted that the above-mentioned embodiments illustrate rather than limit the invention, and that those skilled in the art will be able to design many alternative embodiments without departing from the scope of the appended claims. The word "comprising" does not exclude the presence of elements or steps other than those listed in a claim, "a" or "an" does not exclude a plurality, and a single feature or other unit may fulfil the functions of several units recited in the claims. Any reference numerals or labels in the claims shall not be construed so as to limit their scope.

## Claims

1. A method (400) for interfacing an auxiliary electrical system (300a, 300b) with an electrical power network (200) of a vehicle (100), the method comprising:
i) the auxiliary electrical system transmitting (406) an engagement request to the electrical power network of the vehicle;
ii) the electrical power network of the vehicle, responsive to the engagement request transmitted by the auxiliary electrical system, electrically coupling (410) a battery (210) of the electrical power network of the vehicle to an electrical power take-off point (230) of the vehicle and providing (412) an indication to the auxiliary electrical system that electrical power take-off is engaged;
iii) the auxiliary electrical system, responsive to the indication that the electrical power take-off is engaged:
pre-charging (416) a DC bus of the auxiliary electrical system; and
closing (420a, 420b) a contactor (312) of the auxiliary electrical system to electrically couple the auxiliary electrical system to the electrical power take-off point of the vehicle.

2. The method of claim 1, further comprising:
the auxiliary electrical system determining (402) that a need exists for power from the electrical power network of the vehicle prior to transmitting the engagement request to the electrical power network of the vehicle.

3. The method of claim 1 or claim 2, further comprising:
the electrical power network pre-charging (408) the electrical power take-off before providing the indication to the auxiliary electrical system that the electrical power take-off is engaged.

4. The method of any of the preceding claims, wherein providing the indication that the electrical power take-off is engaged comprises one or more of:
setting an internal status of the electrical power network to engaged; and
transmitting an engagement response indicating that the electrical power take-off is engaged to the auxiliary electrical system.

5. The method of any of the preceding claims, further comprising:
the auxiliary electrical system detecting (414) a voltage at the electrical power take-off point prior to pre-charging the DC bus.

6. The method of claim 5, wherein the detecting the voltage at the electrical power take-off point comprises one or more of:
receiving an indication of the voltage at the electrical power take-off point from the vehicle electrical power network; and
the auxiliary electrical system monitoring the voltage at the electrical power take-off point.

7. The method of any of the preceding claims, wherein pre-charging the DC bus is performed by the auxiliary electrical system either:
using a pre-charging circuit (330) of the auxiliary electrical system, wherein the pre-charging circuit (330) draws power from a battery; or
by the auxiliary electrical system drawing a current from the electrical power take-off point through a resistor (316).

8. The method of any of the preceding claims wherein the contactor of the auxiliary electrical system is closed when a voltage of the DC bus is within a predetermined threshold of a voltage at the electrical power take-off point.
*The method of any of the preceding claims, wherein communication between the auxiliary electrical system and the electrical power network is performed over a controller area network bus.*

9. The method of any of the preceding claims, further comprising:
the auxiliary electrical system:
determining (422) that a need no longer exists for power from the electrical power network of the vehicle;
transmitting (426) a disengagement request to the electrical power network of the vehicle;
optionally, performing (424) a discharging procedure to discharge the DC bus; and
the electrical power network of the vehicle, responsive to the disengagement request:
electrically decoupling (430) the vehicle battery from the electrical power take-off point; and
optionally, performing (428) a discharging procedure to discharge the electrical power take-off point.

10. The method of any of the preceding claims, further comprising:
the auxiliary electrical system, responsive to detection of a drop in a voltage of the electrical power take-off point, opening (438) its contactor; and
optionally, performing (440) a discharging procedure to discharge the DC bus.

11. An auxiliary electrical system (300a, 300b) configured to interface with an electrical power network (200) of a vehicle (100), the auxiliary electrical system comprising:
a connector (340) configured to couple with the electrical power network of the vehicle;
a power distribution unit (310);
a contactor (312), and
a DC bus (324),
wherein the auxiliary electrical system is configured to:
transmit (406) an engagement request to the electrical power network of the vehicle; and
responsive to an indication provided by the electrical power network of the vehicle that an electrical power take-off of the electrical power network of the vehicle is engaged:
pre-charge (416) the DC bus; and
close (420a, 420b) the contactor to electrically couple the auxiliary electrical system to an electrical power take-off point of the electrical power network of the vehicle.

12. A vehicle electrical power network (200) configured to interface with an auxiliary electrical system (300a, 300b), the vehicle electrical power network comprising:
a battery (210);
an electrical power take-off point (230) configured to be electrically coupled to the auxiliary electrical system; and
a contactor (222) for selectively coupling the battery to the electrical power take-off point,
wherein the vehicle electrical power network is configured to, responsive to an engagement request transmitted (406) by the auxiliary electrical system:
electrically couple (410) the battery to the electrical power take-off point; and
provide (412) an indication to the auxiliary electrical system that electrical power take-off is engaged.

13. A method, performed by an auxiliary electrical system (300a, 300b), for interfacing the auxiliary electrical system with an electrical power network (200) of a vehicle (100), the method comprising:
transmitting (406) an engagement request to the electrical power network of the vehicle; and
responsive to an indication provided by the electrical power network of the vehicle that an electrical power take-off of the electrical power network of the vehicle is engaged:
pre-charging (416) a DC bus of the auxiliary electrical system; and
closing (420a, 420b) a contactor (312) of the auxiliary electrical system to electrically couple the auxiliary electrical system to an electrical power take-off point (230) of the vehicle.

14. A method, performed by an electrical power network (200) of a vehicle (100), for interfacing an auxiliary electrical system (300a, 300b) with the electrical power network of the vehicle, the method comprising:
responsive to an engagement request transmitted (406) by the auxiliary electrical system:
electrically coupling (410) a battery (210) of the electrical power network of the vehicle to an electrical power take-off point (230) of the vehicle and providing (412) an indication to the auxiliary electrical system that electrical power take-off is engaged.

15. A computer program (510, 560) comprising instructions to cause the auxiliary electrical system of claim 11 to perform the method of claim 13 or instructions to cause the vehicle electrical power network of claim 12 to perform the method of claim 14.

## Amended claims

### Amended claims in accordance with Rule 137(2) EPC.

1. A method, performed by an auxiliary electrical system (300a, 300b), for interfacing the auxiliary electrical system with an electrical power network (200) of a vehicle (100), the method **characterized by** comprising:
transmitting (406) an engagement request to the electrical power network of the vehicle; and
responsive to an indication provided by the electrical power network of the vehicle that an electrical power take-off of the electrical power network of the vehicle is engaged:
pre-charging (416) a DC bus of the auxiliary electrical system; and
closing (420a, 420b) a contactor (312) of the auxiliary electrical system to electrically couple the auxiliary electrical system to an electrical power take-off point (230) of the vehicle.

2. A method, performed by an electrical power network (200) of a vehicle (100), for interfacing an auxiliary electrical system (300a, 300b) with the electrical power network of the vehicle, the method **characterized by** comprising:
responsive to an engagement request transmitted (406) by the auxiliary electrical system:
electrically coupling (410) a battery (210) of the electrical power network of the vehicle to an electrical power take-off point (230) of the vehicle and providing (412) an indication to the auxiliary electrical system that electrical power take-off is engaged.

3. A method (400) for interfacing an auxiliary electrical system (300a, 300b) with an electrical power network (200) of a vehicle (100), the method **characterized by** comprising:
i) the auxiliary electrical system transmitting (406) an engagement request to the electrical power network of the vehicle;
ii) the electrical power network of the vehicle, responsive to the engagement request transmitted by the auxiliary electrical system, electrically coupling (410) a battery (210) of the electrical power network of the vehicle to an electrical power take-off point (230) of the vehicle and providing (412) an indication to the auxiliary electrical system that electrical power take-off is engaged;
iii) the auxiliary electrical system, responsive to the indication that the electrical power take-off is engaged:
pre-charging (416) a DC bus of the auxiliary electrical system; and
closing (420a, 420b) a contactor (312) of the auxiliary electrical system to electrically couple the auxiliary electrical system to the electrical power take-off point of the vehicle.

4. The method of claim 3, further comprising:
the auxiliary electrical system determining (402) that a need exists for power from the electrical power network of the vehicle prior to transmitting the engagement request to the electrical power network of the vehicle.

5. The method of claim 3 or claim 4, further comprising:
the electrical power network pre-charging (408) the electrical power take-off before providing the indication to the auxiliary electrical system that the electrical power take-off is engaged.

6. The method of any of claims 3 to 5, wherein providing the indication that the electrical power take-off is engaged comprises one or more of:
setting an internal status of the electrical power network to engaged; and
transmitting an engagement response indicating that the electrical power take-off is engaged to the auxiliary electrical system.

7. The method of any of claims 3 to 6, further comprising:
the auxiliary electrical system detecting (414) a voltage at the electrical power take-off point prior to pre-charging the DC bus.

8. The method of claim 7, wherein the detecting the voltage at the electrical power take-off point comprises one or more of:
receiving an indication of the voltage at the electrical power take-off point from the vehicle electrical power network; and
the auxiliary electrical system monitoring the voltage at the electrical power take-off point.

9. The method of any of claims 3 to 8, wherein pre-charging the DC bus is performed by the auxiliary electrical system either:
using a pre-charging circuit (330) of the auxiliary electrical system, wherein the pre-charging circuit (330) draws power from a battery; or
by the auxiliary electrical system drawing a current from the electrical power take-off point through a resistor (316).

10. The method of any of claims 3 to 9, wherein the contactor of the auxiliary electrical system is closed when a voltage of the DC bus is within a predetermined threshold of a voltage at the electrical power take-off point.

11. The method of any of claims 3 to 10, further comprising:
the auxiliary electrical system:
determining (422) that a need no longer exists for power from the electrical power network of the vehicle;
transmitting (426) a disengagement request to the electrical power network of the vehicle;
optionally, performing (424) a discharging procedure to discharge the DC bus; and
the electrical power network of the vehicle, responsive to the disengagement request:
electrically decoupling (430) the vehicle battery from the electrical power take-off point; and
optionally, performing (428) a discharging procedure to discharge the electrical power take-off point.

12. The method of any of claims 3 to 11, further comprising:
the auxiliary electrical system, responsive to detection of a drop in a voltage of the electrical power take-off point, opening (438) its contactor; and
optionally, performing (440) a discharging procedure to discharge the DC bus.

13. An auxiliary electrical system (300a, 300b) configured to interface with an electrical power network (200) of a vehicle (100), the auxiliary electrical system comprising:
a connector (340) configured to couple with the electrical power network of the vehicle;
a power distribution unit (310);
a contactor (312), and
a DC bus (324),
**characterized in that** the auxiliary electrical system is configured to:
transmit (406) an engagement request to the electrical power network of the vehicle; and
responsive to an indication provided by the electrical power network of the vehicle that an electrical power take-off of the electrical power network of the vehicle is engaged:
pre-charge (416) the DC bus; and
close (420a, 420b) the contactor to electrically couple the auxiliary electrical system to an electrical power take-off point of the electrical power network of the vehicle.

14. A vehicle electrical power network (200) configured to interface with an auxiliary electrical system (300a, 300b), the vehicle electrical power network comprising:
a battery (210);
an electrical power take-off point (230) configured to be electrically coupled to the auxiliary electrical system; and
a contactor (222) for selectively coupling the battery to the electrical power take-off point,
**characterized in that** the vehicle electrical power network is configured to, responsive to an engagement request transmitted (406) by the auxiliary electrical system:
electrically couple (410) the battery to the electrical power take-off point; and
provide (412) an indication to the auxiliary electrical system that electrical power take-off is engaged.

15. A computer program (510, 560) comprising instructions to cause the auxiliary electrical system of claim 13 to perform the method of claim 1 or instructions to cause the vehicle electrical power network of claim 14 to perform the method of claim 2.
